Europäisches Patentamt

European Patent Office

Office européen des brevets

(19)

(11) Veröffentlichungsnummer: **0 035 250**
**A1**

(12) **EUROPÄISCHE PATENTANMELDUNG**

(21) Anmeldenummer: **81101432.3**

(22) Anmeldetag: **27.02.81**

(51) Int. Cl.³: **A 01 K 1/06**

(30) Priorität: **03.03.80 DE 8005760 U**

(43) Veröffentlichungstag der Anmeldung: **09.09.81**
Patentblatt 81/36

(84) Benannte Vertragsstaaten: **AT CH DE LI NL**

(71) Anmelder: **Josef Braun, Stalleinrichtungen und
Landtechnik GmbH, D-8152 Unterreit 4 (DE)**

(72) Erfinder: **Braun, Josef, D-8152 Unterreit 4 (DE)**
Erfinder: **Braun, Johann, D-8152 Unterreit 4 (DE)**

(74) Vertreter: **Hain, Leonhard, Dipl.-Ing., Tal 18/IV,
D-8000 München 2 (DE)**

(54) Einsperrgitter, insbesondere für Rindermelkstände.

(57) Bei einem Einsperrgitter insbesondere für Rinder-Melkstände sind in einem Begrenzungsgitter (2) für jeden Standplatz nach oben offene Einsperröffnungen (3) für je einen Rinderkopf frei gehalten. Diese Einsperröffnung ist durch einen Stab (18), der um eine am Begrenzungsgitter (2) gelagerte Vertikalachse schwenkbar ist, nach oben abschliessbar, wodurch der Rinderkopf in Fressstellung über dem Futterbarren (1) festgehalten wird.

Anmelder: Josef Braun Stalleinrichtungen und Landtechnik GmbH, 8152 Unterreit 4

Titel:      Einsperrgitter, insbesondere für Rinder-Melkstände

Die Erfindung betrifft ein Einsperrgitter, insbesondere für Rinder-Melkstände mit einem feststehenden, etwa bis auf Kopfhöhe reichenden Begrenzungsgitter, in dem zu einem Futterbarren hin für jeden Standplatz eine nach oben offene Einsperröffnung für einen Rinderkopf frei gehalten und diese Einsperröffnung durch einen Einsperrhebel oben abschließbar ist.

Bei einem Einsperrgitter dieser Art (DE-OS 26 14 483) ist zum Futtertrog hin ein Begrenzungsgitter von einer Höhe vorgesehen, die es den Rindern ermöglicht, ihren Hals darüber hinwegzubewegen. Eine in diesem Gitter an jedem Standplatz ausgebildete, die ganze Gitterhöhe einnehmende Einsperröffnung hat eine Breite, daß die Rinder darin ihren Hals bis zum Barren absenken, nicht jedoch den breiteren Kopf durchstecken können. Damit ein Rind sich nicht zur unerwünschten Zeit, z.B. vor Beendigung des Melkens, aus der Einsperröffnung und damit vom Standplatz entfernen kann, genügt eine obere Absperrung der Einsperröffnung. Das bekannte Einsperrgitter sieht hierzu einen zweiarmigen Klapphebel vor, der an einem anliegenden Gitterstab des Begrenzungsgitters um eine Horizontalachse schwenkbar gelagert ist. Dieser Klapphebel wird durch die Kuh selbst betätigt, wenn sich ihr Hals zum Futtertrog absenkt und dabei der untere Klapphebelarm weggedrückt und dadurch der obere bügelförmige Hebelarm in die Einsperröffnung hineingeklappt wird. Wenn die Gitterstäbe des Begrenzungsgitters aus Kostengründen nicht überdimensioniert sind, so läßt sich daran eine robuste Lagerung des stark beanspruchten Klapphebels nicht unterbringen. Auch eine Selbstbetätigung durch die Kühe ist dann nicht erwünscht, wenn bei nebeneinanderliegenden Ständen die Möglichkeit besteht, daß sich eine Kuh in eine falsche Einsperröffnung einsperrt. Schließlich läßt sich dieser Klapphebel nicht allen Kuhgrößen so anpassen, daß er stets richtig funktioniert. Der bekannte Klapphebel erfordert zudem eine sehr robuste Verriegelung in der Einsperrstellung, weil die Drehrichtung dieses Hebels in der Bewegungsrichtung der Rinderhälse liegt und daher die gesamten von einer Kuh auf die Absperrung ausgeübten Schub- und Stoßkräfte von dieser Verriegelung aufgefangen werden müssen.

Der Erfindung liegt nun die Aufgabe zugrunde, ein Einsperrgitter der eingangs genannten Art einfacher und vor allem widerstandsfähiger auszubilden.

Zur Lösung dieser Aufgabe ist ein Einsperrgitter der eingangs genannten Art gemäß der Erfindung dadurch gekennzeichnet, daß der Einsperrhebel ein um eine am Begrenzungsgitter od.dgl. Abstützung gelagerte Vertikalachse schwenkbarer Stab ist, der in seiner Schließstellung feststellbar ist.

Ein solcher Einsperrhebel ist entweder direkt oder über ein Gestänge von Hand zu betätigen, wodurch Fehleinsperrungen ausgeschaltet werden. Der stabförmige Einsperrhebel, der nur senkrecht zur Schub- und Stoßrichtung eines eingesperrten Rindes bewegbar ist, läßt sich besonders robust, vor allem auch in seiner Lagerung ausbilden, so daß er höchsten Beanspruchungen ohne weiteres standhält. Wegen seiner Einfachheit ist er praktisch wartungsfrei und von langer Lebensdauer.

Besonders vorteilhaft ist es, den Einsperrhebel an einer über das Begrenzungsgitter hinausragenden Stützsäule zur Aufnahme eines Betätigungsgestänges für mehrere Standplätze zu lagern. Diese Stützsäule kann besonders robust ausgebildet sein. Sie ermöglicht ferner die Anbringung einer einfachen Betätigungseinrichtung für mehrere Einsperrhebel.

Weitere Merkmale der Erfindung sind den Unteransprüchen zu entnehmen.

Die Erfindung wird nachfolgend anhand von Ausführungsbeispielen eines Melkstandes, die auch in der Zeichnung schematisch dargestellt sind, näher beschrieben. Es zeigen:

Fig. 1   eine Ansicht von zwei Standplätzen eines Einsperrgitters, dessen Begrenzungsgitter parallel zum Futterbarren verlaufen und

Fig. 2   eine Draufsicht auf einige Standplätze eines Fischgrät-Melkstandes, wobei die obere Betätigungseinrichtung der Übersicht wegen weggelassen ist.

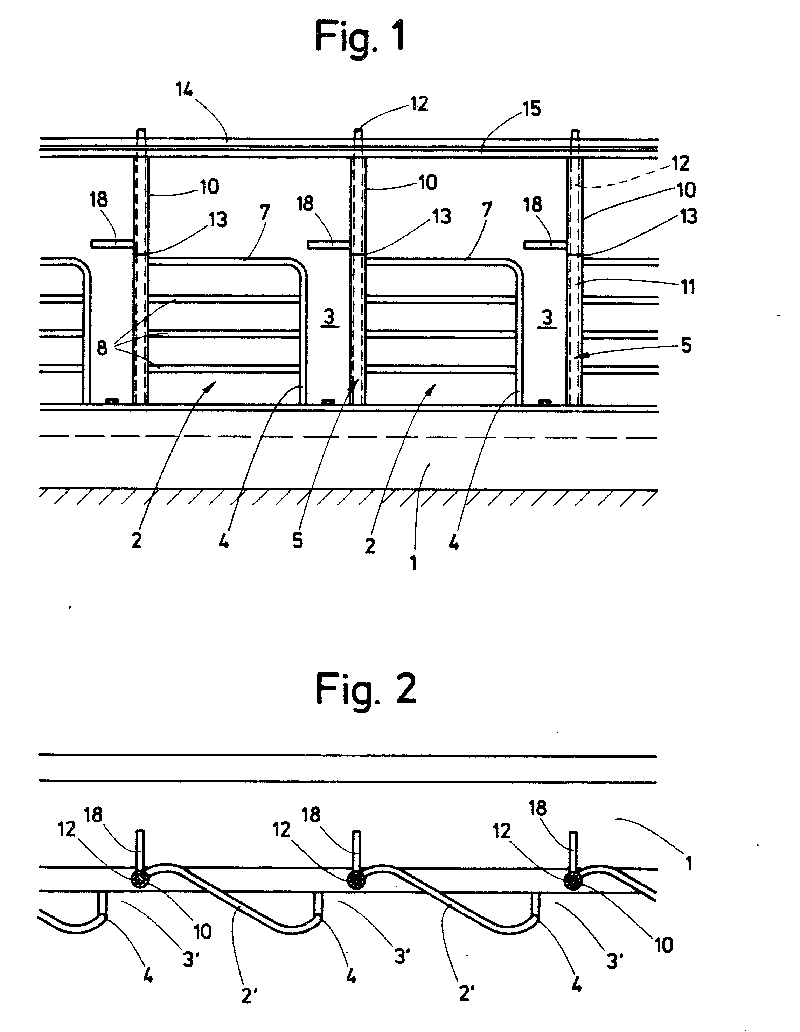

Ein Einsperrgitter für einen Melkstand besteht in der Regel aus mehreren, meist vier Standplätzen, von denen in der Fig. 1 zwei dargestellt sind. Die Abtrennung der Standplätze gegenüber einem Futterbarren 1 erfolgt durch die Begrenzungsgitter 2, die von Einsperröffnungen 3 unterbrochen sind, so daß sie einerseits von einem Gitter-Vertikalstab 4 und andererseits von einer Stützsäule 5 begrenzt sind. Die Breite der Einsperröffnungen ist so groß, daß ein Rinderhals gut darin bewegt werden kann, hingegen der Rinderkopf keinen Platz findet. Das Begrenzungsgitter 2 ist kopfhoch, d.h. eine stehende Kuh kann ihren Kopf und Hals über die waagrechte Oberplanke 7 bewegen. Das Begrenzungsgitter wird schließlich noch von weiteren waagrechten Verbindungsstäben 8 ergänzt. Das in Fig. 1 gezeigte Einsperrgitter ist so ausgebildet, daß die Kühe etwa senkrecht zur Barrenrichtung stehen, wie es an normalen Futterständen die Regel ist. Ist jedoch eine Schrägstellung der Rinder erwünscht, wie es sich für Melkstände zweckmäßig erwiesen hat, dann sind die Begrenzungsgitter 2' fischgrätartig und die Einsperröffnungen 3' etwa rechtwinklig dazu angeordnet (Fig. 2).

Zum Abschließen der Einsperröffnungen trägt die Stützsäule 5 ein Drehrohr 10, das auf einer gegenüber einem Säulenfuß 11 abgesetzten Säulenverlängerung 12 drehbar aufgesteckt und auf einem auf der Höhe der Oberplanke 7 befindlichen Lagerbund 13 abgestützt ist. Die Säulenverlängerung reicht bis auf eine Höhe, die größer als die Rinder ist. Sämtliche Verlängerungen sind mittels einer Querschiene 14 zu einer stabilen Konstruktion verstrebt. An den Enden der etwas kürzeren Drehrohre greift über Mitnehmer (nicht sichtbar) eine Schubstange 15 an, die an einer auf der anderen Seite der Drehrohre vorgesehenen Führungsschiene (nicht sichtbar) verschiebbar gelagert ist und dabei das Drehrohr in Drehung versetzt, und zwar möglichst um einen Drehwinkel von mehr als $90^{o}$. Die Schubstange kann am einen Ende durch eine Zugfeder ( nicht dargestellt ) in Richtung einer Endstellung federbelastet sein, so daß die Schubstange und das Drehrohr 10 bei Freigabe stets in diese Ausgangsstellung zurückkehren. Die Schubstange kann über einen an einem Ende des Einsperrgitters angebrachten Handgriff (nicht gezeichnet) von einer Endstellung in die andere verschoben werden, wodurch auch das Drehrohr mit seinem nahe seinem unteren Ende davon stabförmig abstehenden Einsperrhebel 18 in seine Offen- bzw. Schließstellung gelangt. Die Länge des Einsperrhebels entspricht etwa der Breite der Einsperröffnung 3. Am Drehrohr ist er so angebracht, daß er in der einen Endstellung der Schubstangenbewegung direkt über der Einsperröffnung, also in der Schließstellung (Fig. 1) steht und diese nach oben abschließt, während er in der anderen Endstellung, der Offenstellung, etwa senkrecht hierzu steht und sich zweckmäßig über den Barren erstreckt (Fig. 2).

Die Erfindung beschränkt sich nicht auf die dargestellten Ausführungsbeispiele. So kann für Einzelstände die verstärkte Stützsäule mit der Schubstangen-Betätigungseinrichtung auch entfallen und der Einsperrhebel auch von Hand gedreht werden, wozu entweder der Hebel selbst als Handgriff dient oder noch ein zusätzlicher Griffhebel vorgesehen ist. Der Einsperrhebel kann dann in einfacher Weise an einem drehbaren Lagerkopf, der am Begrenzungsgitter gelagert ist, befestigt sein. Auch das Drehrohr kann durch ein im Innern der Stützsäule drehbar gelagertes Innenrohr ersetzt sein. In diesem Falle ist der Einsperrhebel dann in einem entsprechenden Schlitz bzw. einer Kulisse im nunmehr feststehenden Außenrohr beweglich. Bei Einzelständen mit Einzelbetätigung ist zweckmäßig der Einsperrhebel selbst in der Schließstellung einrastbar, so daß er von der Kuh nicht geöffnet werden kann. Bei Mehrfachständen mit gemeinsamer Betätigungseinrichtung genügt hingegen eine Verriegelung am Betätigungshandgriff für die Schubstange.

Es kann von Vorteil sein, den Einsperrhebel zum Öffnen nicht, wie gezeichnet, über den Barren zu schwenken, sondern in Standrichtung, wodurch vor allem für größere Tiere und/oder bei nicht ganz abgesenktem Kopf das Einsperren erleichtert wird. Um auch ein Einsperren von Rindern, deren Köpfe nicht oder nur wenig gesenkt sind, zu ermöglichen, kann das Drehrohr anhebbar gelagert sein. Beispielsweise kann eine in Öffnungsrichtung ansteigende Lagerkurve für das Drehrohr ausgebildet sein. Auch kann das Drehrohr und/oder der Einsperrhebel beispielsweise in der Offenstellung von Hand oder über ein Gestänge anhebbar sein.

0035250

Durch einen gekrümmten Einsperrhebel kann das Einsperren oder auch die Halterung des Rinderkopfes in der Einsperrstellung erleichtert werden.

Anmelder: Josef Braun Stalleinrichtungen und Landtechnik
GmbH, 8152 Unterreit 4

Titel: Einsperrgitter, insbesondere für Rinder-
Melkstände

Patentansprüche

1. Einsperrgitter, insbesondere für Rinder-Melkstände, mit einem feststehenden, etwa bis auf Kopfhöhe reichenden Begrenzungsgitter (2), in dem zu einem Futterbarren (1) hin für jeden Standplatz eine nach oben offene Einsperröffnung für einen Rinderkopf frei gehalten und diese Einsperröffnung durch einen Einsperrhebel (18) oben abschließbar ist, dadurch gekennzeichnet, daß der Einsperrhebel (18) ein um eine am Begrenzungsgitter (2) od.dgl. Abstützung gelagerte Vertikalachse schwenkbarer Stab ist, der in seiner Schließstellung feststellbar ist.

2. Einsperrgitter nach Anspruch 1, dadurch gekennzeichnet, daß der Einsperrhebel (18) geringfügig oberhalb einer Oberplanke (7) des Begrenzungsgitters angeordnet ist.

3. Einsperrgitter nach Anspruch 1 oder 2, dadurch gekennzeichnet, daß der Einsperrhebel (18) an einem die Einsperröffnung (3) begrenzenden Vertikalstab des Begrenzungsgitters gelagert ist.

4. Einsperrgitter nach Anspruch 1 oder 2, dadurch gekennzeichnet, daß der Einsperrhebel (18) an einer Stützsäule (5) drehbar gelagert ist, deren oberes Ende an einer mehrere Standplätze überspannenden Querschiene (14) befestigt ist.

5. Einsperrgitter nach Anspruch 4, dadurch gekennzeichnet, daß auf die Stützsäule (5) ein Drehrohr (10) aufgesetzt ist, an dessen unterem Ende der Einsperrhebel (18) befestigt ist, während an dessen oberem Ende eine Schubstange (15) angreift.

# Fig. 1

# Fig. 2

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>DE - B - 1 103 071</u> (H. GMEINER) <br> * Spalte 1, Zeilen 25-41; Spalte 3, Zeile 33 - Spalte 4, Zeile 23; Figuren 1-4 * <br><br> -- | 1-5 |
| | <u>US - A - 2 754 803</u> (A. STAMMEL) <br> * Spalte 2, Zeilen 3-39; Figuren 1-5 * <br><br> -- | 4 |
| A | <u>US - A - 2 689 546</u> (H. PETRI) | |
| D | <u>DE - A - 2 614 483</u> (MIELE & CIE.) <br><br> ---- | |

**KLASSIFIKATION DER ANMELDUNG (Int. Cl.)**

A 01 K 1/06

**RECHERCHIERTE SACHGEBIETE (Int. Cl.)**

A 01 K

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 27-05-1981 | NEHRDICH |